# EUROPÄISCHE PATENTSCHRIFT

(11) **EP 3 948 624 B1**
(45) Veröffentlichungstag und Bekanntmachung des Hinweises auf die Patenterteilung: **02.04.2025**
(21) Anmeldenummer: 20727991.0
(22) Anmeldetag: 22.05.2020
(51) Int. Cl.: G06F 21/62, H04L 9/08, G06F 11/14, H04L 9/32, G06F 21/60, H04L 9/40

(54) **VERFAHREN ZUM VERSCHLÜSSELN VON DATEIEN ZUR SICHERHEITSSPEICHERUNG UND RECHENEINRICHTUNG**
METHOD FOR ENCRYPTING FILES FOR SECURE STORAGE, AND COMPUTING DEVICE
PROCÉDÉ DE CHIFFREMENT DE FICHIERS POUR STOCKAGE SÉCURISÉ ET DISPOSITIF DE CALCUL

(30) Priorität: 21.05.2019 DE 102019113485
(43) Veröffentlichungstag der Anmeldung: 09.02.2022
(73) Patentinhaber: Bundesdruckerei GmbH, 10969 Berlin (DE)
(72) Erfinder: GRAUPNER, Hendrik, 14050 Berlin (DE)
(74) Vertreter: Witte, Weller und Partner Patentanwälte mbB Stuttgart
(86) Internationale Anmeldenummer: PCT/EP2020/064257
(87) Internationale Veröffentlichungsnummer: WO 2020/234443

(56) Entgegenhaltungen:
- GB-A- 2 496 258
- US-B1- 9 390 101
- AKHILA K ET AL: "A Study on Deduplication Techniques over Encrypted Data", PROCEDIA COMPUTER SCIENCE, ELSEVIER, AMSTERDAM, NL, vol. 87, 7 June 2016 (2016-06-07), pages 38 - 43, XP029579533, ISSN: 1877-0509, DOI: 10.1016/J.PROCS.2016.05.123

## Beschreibung

### Technisches Gebiet

Die vorliegende Erfindung betrifft die Verschlüsselung von Dateien zur Sicherheitsspeicherung, insbesondere im Zusammenhang mit einer Daten-Deduplizierung, wie bspw. bei der konvergenten Verschlüsselung.

### Beschreibung des Standes der Technik

Aus der EP 0 774 715 A1 ist ein System zum Sichern von Dateien von Datenträgern auf mehreren Knoten eines Computernetzwerks auf ein gemeinsames Backup-Speichermittel mit Zufallszugriff bekannt. Als Teil des Backup-Prozesses können doppelte Dateien (oder Teile von Dateien) über Knoten hinweg identifiziert werden, so dass nur eine einzige Kopie des Inhalts der doppelten Dateien (oder Teile davon) in den Backup-Speichermitteln gespeichert wird. Für jeden Sicherungsvorgang nach der ersten Sicherung auf einem bestimmten Datenträger werden nur die Dateien, die sich seit der letzten Sicherung geändert haben, tatsächlich aus dem Datenträger gelesen und auf dem Backup-Speichermittel gespeichert. Darüber hinaus können Unterschiede zwischen einer Datei und ihrer Version in der vorherigen Sicherung berechnet werden, so dass nur die Änderungen an der Datei auf das Backup-Speichermittel geschrieben werden müssen. Dadurch wird sowohl der Speicherplatz als auch die für die Durchführung des Backups erforderliche Netzwerkbandbreite reduziert.

Das aus der EP 0 774 715 A1 bekannte Verfahren ist ein verbreiteter Prozess, der auch als "konvergente Verschlüsselung" (convergent encryption CE; auch "content hash keying") bezeichnet wird und wie beschrieben eine Deduplizierung der Daten einschließlich Verschlüsselung zulässt. Wird ein mit einem vorhandenen Datenblock identischer Datenblock ermittelt, wird einer der Blöcke entfernt und stattdessen nur ein Verweis (Locator) auf den anderen Datenblock gespeichert. Dieser Verweis benötigt weniger Speicherplatz, als der Block selbst. Die Datendeduplizierung identifiziert und eliminiert somit redundante Daten, bevor diese auf einen nichtflüchtigen Datenträger geschrieben werden.

US 9,390,101 B1 offenbart eine Deduplizierung in einem Sicherungskontext und insbesondere eine Deduplizierung zwischen Mitgliedern eines Vertrauensnetzwerks.

Allerdings sind mit der konvergenten Verschlüsselung auch Sicherheitsrisiken verbunden, da diese einige Angriffsszenarien zulässt. Hierbei stellt die Speicherung der Liste von Verweisen/Locators auf einem zentralen Server ein Problem dar. Über diese Verweise findet die Zuordnung von Daten, also die eigentliche Deduplizierung statt. Kommt ein Angreifer in den Besitz eines Locators, so kann er damit unrechtmäßigen Zugriff auf verschlüsselte Daten erlangen, welche er offline wesentlich leichter angreifen kann.

### Zusammenfassung der Erfindung

Ausgehend hiervon werden erfindungsgemäß ein Verfahren mit den Merkmalen des Anspruchs 1, eine Recheneinrichtung mit den Merkmalen des Anspruchs 8, ein Computerprogramm mit den Merkmalen des Anspruchs 9 sowie ein Aktualisierungsprogramm mit den Merkmalen des Anspruchs 10 vorgeschlagen.

Die Erkenntnis der Erfindung liegt darin begründet, eine asymmetrische Komponente in dem Verfahren der konvergenten Verschlüsselung vorzusehen. Die asymmetrische Komponente umfasst einen für die verschlüsselte Datei eindeutigen asymmetrisch deterministisch generierten Indexwert, der auf einen Speicherort der verschlüsselten Datei verweist, mithin als Locator dient.

Die erfindungsgemäße asymmetrische Komponente stellt somit einen verifizierbaren Locator für die verschlüsselte und abgespeicherte Datei dar. Eine asymmetrische Komponente besteht typischerweise aus zwei Bestandteilen, einem privaten Bestandteil (privater Schlüssel) und einem öffentlichen Bestandteil (öffentlicher Schlüssel). Der Erfindung liegt somit die Erkenntnis zugrunde, die Schwachstellen der lediglich eine symmetrische Verschlüsselung nutzenden konvergenten Verschlüsselung durch Hinzufügen der asymmetrischen Komponente auszuräumen, bei der der öffentliche Bestandteil (öffentliche Schlüssel) der asymmetrischen Komponenten als ein für die verschlüsselte Datei eindeutiger asymmetrisch deterministisch generierter Indexwert als verifizierbarer Locator verwendet wird, während der entsprechende private Bestandteil (private Schlüssel) vom Benutzer geheimgehalten wird. Die deterministische Ableitung aus der zu verschlüsselnden Datei stellt sicher, dass jeder Besitzer desselben Dateiinhalts das gleiche Schlüsselpaar berechnen kann.

Die asymmetrische Komponente kann auf der Grundlage eines für die zu speichernde Datei eindeutigen Identifikationscodes erzeugt werden. Bei dem eindeutigen Identifikationscode kann es sich bspw. um einen Fingerabdruck, einen Hash-Wert o.dgl. der zu speichernden Datei handeln. Gemäß einer möglichen Ausführungsform der Erfindung kann der eindeutige Identifikationscode als symmetrischer Schlüssel zum symmetrischen Verschlüsseln der zu speichernden Datei verwendet werden. Die Erzeugung der asymmetrischen Komponente erfolgt dann entsprechend aus einer deterministischen Ableitung aus dem symmetrischen Verschlüsselungsschlüssel. Gemäß einer anderen Variante der Erfindung wird als symmetrischer Verschlüsselungsschlüssel ein zufällig erzeugter Schlüssel (Zufallsschlüssel) verwendet.

Als asymmetrische Komponente der Erfindung kann somit ein einen privaten Schlüssel und einen öffentlichen Schlüssel umfassendes asymmetrisches Schlüsselpaar dienen. Zur Erzeugung der asymmetrischen Komponente kann auf der Basis eines auf dem Identifikationscode beruhenden Startwerts zunächst der private Schlüssel sowie anschließend der dazugehörende öffentliche Schlüssel generiert werden. Der öffentliche Schlüssel dient erfindungsgemäß als abzuspeichernder verifizierbarer Locator für den Speicherort der verschlüsselten Datei.

Als Startwert kann der Identifikationscode selbst dienen oder ein bspw. anhand einer Schlüsselableitungsfunktion aus dem Identifikationscode berechneter Wert.

Im Falle der Verwendung eines zufälligen Schlüssels kann der zufällige Schlüssel anhand des öffentlichen Schlüssels verschlüsselt werden, um dann gemeinsam mit dem Locator abgespeichert werden.

Das erfindungsgemäße Verfahren kann auf einer Recheneinrichtung ausgeführt werden, die in ein Computernetzwerk eingebunden und mit einem zentralen Datenspeicher zur Sicherungsspeicherung von Dateien und mit einem öffentlichen Schlüsselindex verbunden ist und einen Prozessor aufweist, der zur Ausführung des erfindungsgemäßen Verfahrens ausgelegt ist. Typischerweise kann es sich bei einer derartigen Recheneinrichtung um ein Nutzerendgerät wie einen PC, einen Client-Rechner, ein mobiles Endgerät wie ein Smartphone o.dgl. handeln. Aus Gründen der Datensicherheit erscheint es angebracht, das Verfahren auf einem Nutzerendgerät auszuführen; es kann jedoch auch auf einer zentralen Recheneinrichtung wie einem Cloud-Server ausgeführt werden, wenn dort für eine ausreichende Datensicherheit (Zugriffsverhinderung auf den geheimen privaten Schlüssel) gesorgt ist.

Die vorliegende Beschreibung deckt auch ein Computerprogramm mit Programmcode ab, der dazu geeignet ist, ein erfindungsgemäßes Verfahren auszuführen, wenn das Computerprogramm auf einer wie voranstehend beschriebenen Recheneinrichtung abläuft. Es werden sowohl das Computerprogramm selbst als auch abgespeichert auf einem computerlesbaren Medium (Computerprogrammprodukt) beansprucht. Zudem wird ein Update-Programm beansprucht, das einem bestehenden Computerprogramm zur Ausführung eines konvergenten Verschlüsselungsverfahrens die zur Erzeugung der asymmetrischen Komponente und der erfindungsgemäßen Abspeicherung des erzeugten Locators notwendigen Schritte hinzufügt.

Weitere Vorteile und Ausgestaltungen der Erfindung ergeben sich aus den Unteransprüchen, der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, wie sie in den Ansprüchen definiert ist, zu verlassen.

Die Erfindung ist anhand von Ausführungsbeispielen in den Zeichnungen schematisch dargestellt und wird im Folgenden unter Bezugnahme auf die Zeichnungen ausführlich beschrieben.

### Kurzbeschreibung der Zeichnungen

Figur 1 zeigt ein Blockbild-Ablaufdiagramm einer aus dem Stand der Technik bekannten konvergenten Verschlüsselung.
Figur 2 zeigt ein Blockbild-Ablaufdiagramm einer ersten Ausführungsform einer erfindungsgemäßen asymmetrischen konvergenten Verschlüsselung.
Figur 3 zeigt ein Blockbild-Ablaufdiagramm einer zweiten Ausführungsform einer erfindungsgemäßen asymmetrischen konvergenten Verschlüsselung.

### Ausführliche Beschreibung

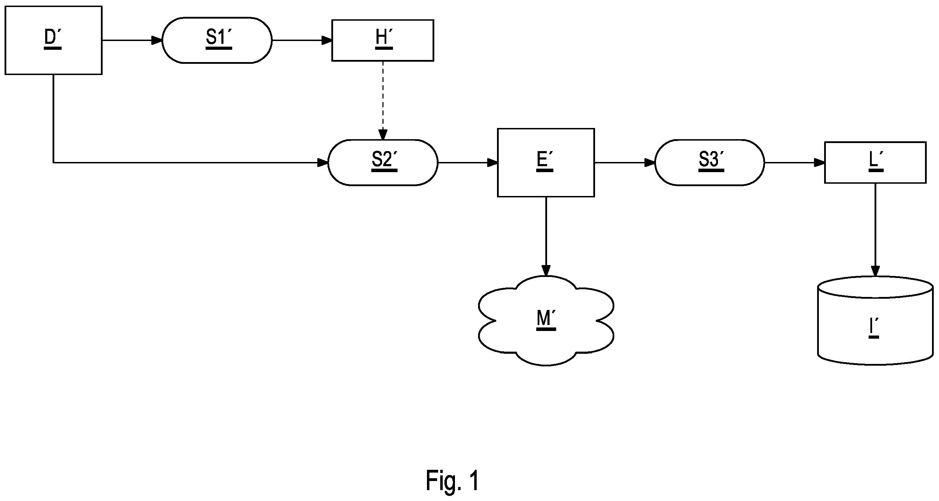

Figur 1 veranschaulicht den Ablauf einer aus dem Stand der Technik bekannten konvergenten Verschlüsselung.

Zunächst wird eine Datei D' bereitgestellt, die in einem zentralen Datenspeicher M' (bspw. ein Cloudspeicher) abgespeichert (bspw. Sicherungsspeicherung) werden soll. Anschließend wird bei S1' anhand eines kryptographischen Hash-Algorithmus der kryptographische Hashwert H' der Datei D' berechnet. Die Datei D' wird dann bei S2' verschlüsselt, indem der berechnete Hashwert H' als Schlüssel verwendet wird (der von dem Hashwert H' zu S2' weisende gestrichelte Pfeil deutet diese Verwendung als Parameter der Verschlüsselungsfunktion an). Das Ergebnis ist die verschlüsselte Datei E', die in dem zentralen Datenspeicher M' abgespeichert wird. Zudem wird bei S3' wiederum unter Anwendung des bereits zuvor verwendeten Hash-Algorithmus der Hashwert der verschlüsselten Datei E' berechnet und als Locator L' (Verweis/Link/Pointer) in einem zentralen öffentlichen Schlüsselindex I' abgespeichert.

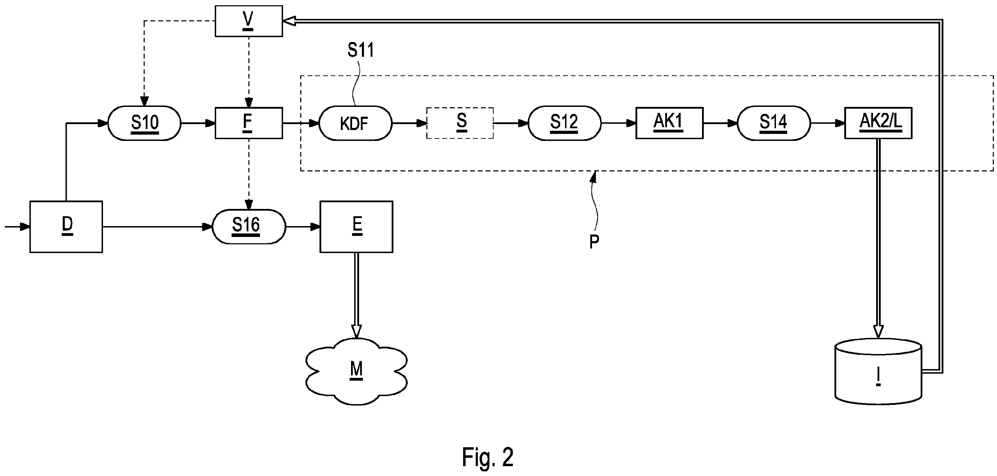

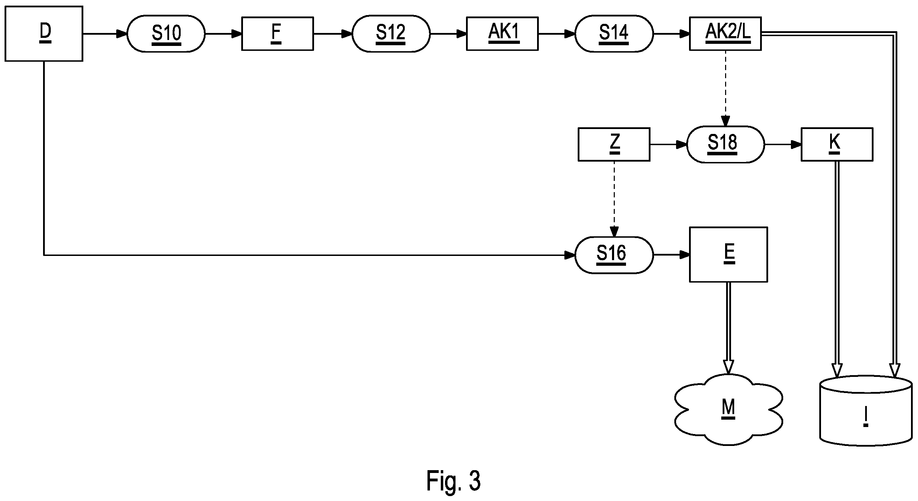

Demgegenüber gestaltet sich das erfindungsgemäße Verfahren wie in den Figuren 2 und 3 veranschaulicht. In den Figuren 2 und 3 sind gleiche oder ähnliche Merkmale, Elemente und Verfahrensschritte mit den gleichen Bezugszeichen bezeichnet.

Figur 2 zeigt eine erste Variante eines erfindungsgemäßen Verfahrens, das so ausgestaltet ist, dass es auch zu einer Erweiterung (Update) eines bestehenden Programms zur konvergenten Verschlüsselung verwendet werden kann, um so zu einer "asymmetrischen konvergenten Verschlüsselung" (asymmetric convergent encryption, ACE) erweitert zu werden.

Gemäß der Erfindung wird von einer zu verschlüsselnden und zu speichernden (Klar-)Datei D bei S10 mittels eines Fingerabdruck-Algorithmus (fingerprinting algorithm) ein "Fingerabdruck" F berechnet. Fingerabdruck-Algorithmen sind dem Fachmann hinlänglich bekannt und werden dazu verwendet, beliebig große Datenelemente (wie bspw. eine Computerdatei) auf eine viel kürzere Bitfolge abzubilden (eben den "Fingerabdruck" dieser Datei), die die Originaldaten für alle praktischen Zwecke eindeutig identifiziert. Dieser Fingerabdruck kann insbesondere für die Datendeduplizierung verwendet werden. Dieses Vorgehen wird auch als Datei-Fingerprinting, Daten-Fingerprinting oder strukturierter Daten-Fingerprinting bezeichnet. Fingerprinting-Funktionen können als leistungsstarke Hash-Funktionen angesehen werden, mit denen wesentliche Datenblöcke eindeutig identifiziert werden können, bei denen kryptographische Hash-Funktionen unnötig sein können. Zur Verbesserung der Sicherheit gegenüber einfachen Hash-Berechnungen kann bspw. Hash-basierter Message Authentication Code (HMAC) in Kombination mit einem sicheren Hashing, z.B. SHA-256, verwendet werden. Dieses Szenario ist sicherer, da es einen geheimen Schlüssel V enthält (der in dem dargestellten Ausführungsbeispiel von einem zentralen Indexspeicher I (Server, der als öffentlicher Schlüsselindex dient) bereitgestellt wird, damit sichergestellt ist, dass alle Benutzer, die den gleichen Dateninhalt sicher deduplizieren können, den gleichen Schlüssel erhalten). Selbstverständlich kann das dargestellte Verfahren auch mit einem einfacheren Fingerprinting-Verfahren und ohne den beschriebenen geheimen Schlüssel realisiert werden.

Der erzeugte Identifikationscode (Fingerabdruck) F dient zur symmetrischen Verschlüsselung der Datei D bei S16 (der von dem Identifikationscode F zu S16 weisende gestrichelte Pfeil deutet wiederum an, dass der Identifikationscode/Fingerabdruck F als Verschlüsselungsparameter verwendet wird). Die derart verschlüsselte Datei ist mit dem Bezugszeichen E bezeichnet. Die verschlüsselte Datei E wird in einem zentralen Datenspeicher M hinterlegt.

Der Identifikationscode F dient zudem als Grundlage für die Erzeugung der erfindungsgemäßen asymmetrischen Komponente, sprich einem asymmetrischen Schlüsselpaar AK1, AK2. Der Identifikationscode F kann direkt als Startwert (Seed) S für die Erzeugung eines privaten Schlüssels AK1 (bei S12) verwendet werden, oder optional - wie in dem dargestellten Ausführungsbeispiel - als Grundlage für eine Erzeugung des Startwertes S anhand einer Schlüsselableitungsfunktion KDF (Key Derivation Function) bei S11 dienen. Die Verwendung einer Schlüsselableitungsfunktion KDF fügt dem Ablauf eine Parametrisierung des privaten Schlüsselberechnungs-Startwerts S hinzu. Bei der Durchführung Schlüsselableitungsfunktion KDF bei S11 kann derselbe geheime Schlüssel V wie bei der Generierung des symmetrischen Schlüssels F bei S10 verwendet werden.

Basierend auf dem Startwert S wird der private Schlüssel AK1 bei S12 erzeugt, und anschließend wird ein passender öffentlicher Schlüssel AK2 bei S14 erzeugt.

Der öffentliche Schlüssel AK2 dient als Locator L für den Speicherort der verschlüsselten Datei E in dem zentralen Speicher M und wird in dem zentralen öffentlichen Index I gespeichert.

In der Darstellung der Figur 2 sind diejenigen Verfahrensschritte, die dem bekannten Verfahren der konvergenten Verschlüsselung sozusagen als Ergänzungsmodul hinzuzufügen sind, um zu dem erfindungsgemäßen Verfahren zu gelangen, von einem gestrichelten Rechteck, bezeichnet mit "P", umgeben (zzgl. dem ggf. bereitzustellenden geheimen Schlüssel V). Dieses "Hinzufügen" kann in der Praxis durch ein entsprechendes Update/Aktualisierungs-Programm erfolgen.

Gemäß der in der Variante der Figur 3 dargestellten Ausgestaltung kann zur symmetrischen Verschlüsselung ein unabhängig vom Dateninhalt zufällig erzeugter symmetrischer Schlüssel Z verwendet werden.

Wie bereits voranstehend unter Bezugnahme auf die Figur 2 beschrieben, wird von einer zu verschlüsselnden und zu speichernden (Klar-)Datei D bei S10 mittels eines Fingerabdruck-Algorithmus (fingerprinting algorithm) ein "Fingerabdruck" F berechnet.

Des weiteren wird - auf der Grundlage des Fingerabdrucks F und wiederum ähnlich wie voranstehend bereits beschrieben - ein asymmetrisches Schlüsselpaar AK erzeugt, das aus einem privaten Schlüssel AK1 und einem öffentlichen Schlüssel AK2 besteht. Der private Schlüssel AK1 wird bei S12 erzeugt und der öffentliche Schlüssel AK2 wird bei S14 erzeugt. Selbstverständlich kann auch in dieser Ausführungsvariante der geheime Schlüssel V bei der Erzeugung des Fingerabdrucks F und/oder bei der Parametrisierung des Startwerts S für die Schlüsselberechnung bei S12 verwendet werden.

Außerdem wird ein zufälliger Dateischlüssel Z (Zufallsschlüssel) erzeugt, der zur symmetrischen Verschlüsselung der Datei D bei S16 dient. Die verschlüsselte Datei E wird in einem zentralen Datenspeicher M hinterlegt.

Der Zufallsschlüssel Z wird bei S18 einer asymmetrischen Verschlüsselung unterzogen, woraus ein verschlüsselter Dateischlüssel K entsteht, der gemeinsam mit dem öffentlichen Schlüssel AK2, der wie bereits beschrieben als Locator dient, in einem zentralen öffentlichen Index I gespeichert wird.

Sowohl der zentrale Datenspeicher M als auch der zentrale Schlüsselindex bzw. Index für öffentliche Schlüssel sind an sich bekannte und dem Fachmann geläufige Speichereinrichtungen, wie Zentralserver, Datenbanken, o.dgl., die in ein Kommunikationsnetzwerk wie das Internet oder ein Intranet eingebunden und darüber zugänglich sind. Insbesondere können die Zentralspeicher zum Speichern/Sichern der verschlüsselten Dateien Bestandteile von Cloudserver-Lösungen sein.

Das erfindungsgemäße Verfahren wird vorzugsweise auf einem Nutzerendgerät ausgeführt, während das Speichern der Daten (verschlüsselte Datei E, Locator L, ggf. verschlüsselter Verschlüsselungsschlüssel K) auf zentralen Speichereinrichtungen M, I erfolgen. Um diesen Übergang von Nutzerbereich zu zentralem Bereich zu veranschaulichen, sind die entsprechenden Pfeile als Doppelpfeile eingezeichnet.

Wie bei der konvergenten Verschlüsselung harmonisiert das erfindungsgemäße Verfahren mit der Deduplizierung, da durch Verwendung eines Inhaltshashwertes/Fingerabdrucks der zu verschlüsselnden Datei als symmetrischer Verschlüsselungsschlüssel Besitzer desselben Dateiinhalts den Chiffriertext (der verschlüsselten Datei) unabhängig voneinander entschlüsseln können. Mit der asymmetrischen konvergenten Verschlüsselung der Erfindung wird der Locator für den Speicherort der verschlüsselten Datei verifizierbar gemacht. Mit der hinzugefügten, ebenfalls deterministisch aus dem Dateninhalt erzeugten asymmetrischen Komponente wird ein öffentlicher Schlüssel hinzugefügt, der als Locator dient. Der entsprechende private Schlüssel wird geheimgehalten und dient zur Verifikation, da jeder Besitzer desselben Dateiinhalts das identische asymmetrische Schlüsselpaar berechnen kann. Auf diese Weise wird sichergestellt, dass ein Nutzer nicht nur (womöglich unberechtigten) Zugriff auf den Locator hat, sondern tatsächlich über die Daten verfügt, die er zu besitzen vorgibt.

## Patentansprüche

1. Verfahren zum Verschlüsseln von Dateien zur Sicherheitsspeicherung, mit den folgenden Schritten:
- Erzeugen eines für eine bereitgestellte zu speichernde Datei (D) eindeutigen Identifikationscodes (F),
- symmetrisches Verschlüsseln der zu speichernden Datei (D) anhand eines symmetrischen Schlüssels (F, Z) und Abspeichern der derart verschlüsselten Datei (K),
**gekennzeichnet durch**
- Erzeugen eines einen privaten Schlüssel (AK1) und einen öffentlichen Schlüssel (AK2) umfassenden asymmetrischen Schlüsselpaars (AK1, AK2), indem auf der Basis eines auf dem Identifikationscode (F) beruhenden Startwerts (S) der private Schlüssel (AK1) sowie der dazugehörende öffentliche Schlüssel (AK2) generiert wird und
- Speichern des öffentlichen Schlüssels (AK2) als einen für die verschlüsselte Datei (K) eindeutigen asymmetrisch deterministisch generierten Indexwert (L), der auf einen Speicherort der verschlüsselten Datei (K) verweist.

2. Verfahren nach Anspruch 1, bei dem das Erzeugen des Identifikationscodes (F) unter Verwendung eines bereitgestellten geheimen Schlüssels (V) erfolgt.

3. Verfahren nach Anspruch 1 oder 2, bei dem der symmetrische Schlüssel der eindeutige Identifikationscode (F) oder ein zufällig erzeugter Schlüssel (Z) ist.

4. Verfahren nach einem der Ansprüche 1 bis 3, bei dem der eindeutige Identifikationscode (F) ein Fingerabdruck (F) der zu speichernden Datei (D) ist.

5. Verfahren nach einem der Ansprüche 1 bis 4, bei dem in dem Schritt des Erzeugens der Identifikationscode (F) selbst der Startwert (S) ist, oder bei dem der Startwert (S) anhand einer Schlüsselableitungsfunktion (KDF) aus dem Identifikationscode (F) berechnet wird.

6. Verfahren nach Anspruch 5, bei dem die Schlüsselableitungsfunktion (KDF) den geheimen Schlüssel (V) verwendet.

7. Verfahren nach einem der Ansprüche 1 bis 6, mit dem Schritt des asymmetrischen Verschlüsselns des zufälligen Schlüssels (Z) anhand des öffentlichen Schlüssels (AK2) und Abspeichern des verschlüsselten zufälligen Schlüssels (K) zusammen mit dem Indexwert (L).

8. Recheneinrichtung, die in ein Computernetzwerk eingebunden und mit einem zentralen Datenspeicher (M) zur Sicherungsspeicherung von Dateien (D) und mit einem öffentlichen Schlüsselindex (I) als Speicher für Indexwerte (L) verbunden ist, und die einen Prozessor umfasst, der zur Ausführung eines Verfahrens nach einem der Ansprüche 1 bis 7 ausgelegt ist.

9. Computerprogramm mit Programmcodemitteln, um alle Schritte eines Verfahrens nach einem der Ansprüche 1 bis 7 durchzuführen, wenn das Computerprogramm auf einer Recheneinrichtung ausgeführt wird.

10. Computerprogramm mit Programmcodemitteln, die dazu ausgelegt sind, bei Ausführung des Computerprogramms als Aktualisierungsprogramm auf einer Recheneinheit, die bereits zur Ausführung der Schritte
- Erzeugen eines für eine bereitgestellte zu speichernde Datei (D) eindeutigen Identifikationscodes (F),
- symmetrisches Verschlüsseln der zu speichernden Datei (D) anhand eines symmetrischen Schlüssels (F, Z) und Abspeichern der derart verschlüsselten Datei (K),
ausgelegt ist, **gekennzeichnet durch**, im Wege der Programmerweiterung noch die folgenden Schritte hinzuzufügen:
- Erzeugen eines einen privaten Schlüssel (AK1) und einen öffentlichen Schlüssel (AK2) umfassenden asymmetrischen Schlüsselpaars (AK1, AK2), indem auf der Basis eines auf dem Identifikationscode (F) beruhenden Startwerts (S) der private Schlüssel (AK1) sowie der dazugehörende öffentliche Schlüssel (AK2) generiert wird und
- Speichern des öffentlichen Schlüssels (AK2) als einen für die verschlüsselte Datei (K) eindeutigen asymmetrisch deterministisch generierten Indexwert (L), der auf einen Speicherort der verschlüsselten Datei (K) verweist.

## Claims

1. Method for encrypting files for backup storage, comprising the following steps:
- generating a unique identification code (F) for a provided file (D) to be stored,
- symmetrically encrypting the file (D) to be stored using a symmetric key (F, Z) and storing the file (K) encrypted in this way, **characterized by**
- generating an asymmetric key pair (AK1, AK2) comprising a private key (AK1) and a public key (AK2) by generating the private key (AK1) and the associated public key (AK2) on the basis of a starting value (S) based on the identification code (F) and
- storing the public key (AK2) as an asymmetrically deterministically generated index value (L) that is unique for the encrypted file (K) and points to a memory location of the encrypted file (K).

2. Method according to claim 1, wherein the identification code (F) is generated using a provided secret key (V).

3. Method according to claim 1 or 2, wherein the symmetric key is the unique identification code (F) or a randomly generated key (Z).

4. Method according to any of claims 1 to 3, wherein the unique identification code (F) is a fingerprint (F) of the file (D) to be stored.

5. Method according to any of claims 1 to 4, wherein in the generating step the identification code (F) itself is the starting value (S), or wherein the starting value (S) is calculated from the identification code (F) using a key derivation function (KDF).

6. Method according to claim 5, wherein the key derivation function (KDF) uses the secret key (V).

7. Method according to any of claims 1 to 6, comprising the step of asymmetrically encrypting the random key (Z) using the public key (AK2) and storing the encrypted random key (K) together with the index value (L).

8. Computing device which is integrated into a computer network and is connected to a central data memory (M) for storing files (D) as backup and to a public key index (I) as a memory for index values (L), and which comprises a processor which is designed to carry out a method according to any of claims 1 to 7.

9. Computer program comprising program code means for carrying out all steps of a method according to any of claims 1 to 7 when the computer program is executed on a computing device.

10. Computer program comprising program code means which are designed, when the computer program is executed as an update program on a computing unit which is already designed to execute the steps of
- generating a unique identification code (F) for a provided file (D) to be stored,
- symmetrically encrypting the file (D) to be stored using a symmetric key (F, Z) and storing the file (K) encrypted in this way, **characterized by** adding the following steps by way of program extension:
- generating an asymmetric key pair (AK1, AK2) comprising a private key (AK1) and a public key (AK2) by generating the private key (AK1) and the associated public key (AK2) on the basis of a starting value (S) based on the identification code (F) and
- storing the public key (AK2) as an asymmetrically deterministically generated index value (L) that is unique for the encrypted file (K) and points to a memory location of the encrypted file (K).

## Revendications

1. Procédé de chiffrement de données pour une sauvegarde de sécurité, comprenant les étapes consistant à :
- générer un code d'identification univoque (F) pour un fichier fourni à sauvegarder (D),
- effectuer un chiffrement symétrique du fichier à sauvegarder (D) à l'aide d'une clé symétrique (F, Z) et stocker le fichier ainsi chiffré (K),
**caractérisé par** les étapes consistant à :
- générer une paire de clés asymétriques (AK1, AK2) comprenant une clé privée (AK1) et une clé publique (AK2), la clé privée (AK1) et la clé publique correspondante (AK2) étant générées sur la base d'une valeur de départ (S) reposant sur le code d'identification (F), et
- sauvegarder la clé publique (AK2) en tant que valeur d'indice univoque générée de manière asymétrique et déterministe (L) qui renvoie à un emplacement de sauvegarde du fichier chiffré (K).

2. Procédé selon la revendication 1, dans lequel l'étape consistant à générer le code d'identification (F) s'effectue en utilisant une clé secrète fournie (V).

3. Procédé selon la revendication 1 ou 2, dans lequel la clé symétrique est le code d'identification univoque (F) ou une clé générée de manière aléatoire (Z).

4. Procédé selon l'une quelconque des revendications 1 à 3, dans lequel le code d'identification univoque (F) est une empreinte digitale (F) du fichier à sauvegarder (D).

5. Procédé selon l'une quelconque des revendications 1 à 4, dans lequel, dans l'étape de génération, le code d'identification (F) est lui-même la valeur de départ (S), ou dans lequel la valeur de départ (S) est calculée à partir du code d'identification (F) à l'aide d'une fonction de dérivation de clé (KDF).

6. Procédé selon la revendication 5, dans lequel la fonction de dérivation de clé (KDF) utilise la crise secrète (V).

7. Procédé selon l'une quelconque des revendications 1 à 6, comprenant les étapes consistant à effectuer un chiffrement asymétrique de la clé aléatoire (Z) à l'aide de la clé publique (AK2) et à sauvegarder la clé aléatoire chiffrée (K) conjointement avec la valeur d'indice (L).

8. Dispositif de calcul qui est intégré dans un réseau d'ordinateurs et qui est connecté à un enregistreur central de données (M) destiné à une sauvegarde de sécurité de fichiers (D) et à un indice de clés publiques (I) en tant qu'enregistreur de valeurs d'indice (L), et qui comprend un processeur conçu pour exécuter un procédé selon l'une quelconque des revendications 1 à 7.

9. Programme d'ordinateur comprenant des moyens de codes de programmation pour effectuer toutes les étapes d'un procédé selon l'une quelconque des revendications 1 à 7, quand le programme d'ordinateur est exécuté sur un dispositif de calcul.

10. Programme d'ordinateur comprenant des moyens de code de programmation qui, lors de l'exécution du programme d'ordinateur en tant que programme de mise à jour sur une unité de calcul qui est déjà conçue pour exécuter les étapes consistant à :
- générer un code d'identification univoque (F) pour un fichier fourni à sauvegarder (D),
- effectuer un chiffrement symétrique du fichier à sauvegarder (D) à l'aide d'une clé symétrique (F, Z) et stocker le fichier ainsi chiffré (K),
est **caractérisé en ce qu'**il ajoute, par le biais d'une extension de programme, les étapes consistant à :
- générer une paire de clés asymétriques (AK1, AK2) comprenant une clé privée (AK1) et une clé publique (AK2), la clé privée (AK1) et la clé publique correspondante (AK2) étant générées sur la base d'une valeur de départ (S) reposant sur le code d'identification (F), et
- sauvegarder la clé publique (AK2) en tant que valeur d'indice univoque générée de manière asymétrique et déterministe (L) qui renvoie à un emplacement de sauvegarde du fichier chiffré (K).
